Europäisches Patentamt

**European Patent Office**

Office européen des brevets

(19)

(11) Numéro de publication: **0 280 594**
**B1**

(12)

# FASCICULE DE BREVET EUROPEEN

(45) Date de publication du fascicule du brevet:
06.12.89

(51) Int. Cl.⁴: **A47J 31/06, A47J 31/40,**
**A47J 42/44**

(21) Numéro de dépôt: 88400174.4

(22) Date de dépôt: 27.01.88

(54) Dispositif de détection et d'affichage pour machine à café express à service automatique.

(30) Priorité: 11.02.87 FR 8701801

(43) Date de publication de la demande:
**31.08.88 Bulletin 88/35**

(45) Mention de la délivrance du brevet:
**06.12.89 Bulletin 89/49**

(84) Etats contractants désignés:
**CH DE ES FR GB GR IT LI NL SE**

(56) Documents cités:
**EP-A- 0 004 659**
**DE-A- 2 048 163**
**DE-B- 1 209 257**
**FR-A- 1 069 975**
**FR-A- 1 156 557**
**FR-A- 1 334 489**
**FR-A- 1 476 354**
**FR-A- 2 522 951**

(73) Titulaire: **Levi, Jean-Pierre, Résidence Isola Celesta-Bat.**
**C Rez de Jardin- L'Ithaque 4, corniche Fleurie,**
**F-06200 Nice(FR)**
Titulaire: **Levi, Mario, "Les Lavandes" 90, avenue de la**
**Lanterne, F-06200 Nice(FR)**

(72) Inventeur: **Levi, Jean-Pierre, Résidence Isola**
**Celesta-Bat. C Rez de Jardin- L'Ithaque 4, corniche**
**Fleurie, F-06200 Nice(FR)**
Inventeur: **Levi, Mario, "Les Lavandes" 90, avenue de la**
**Lanterne, F-06200 Nice(FR)**

(74) Mandataire: **Gérardin, Robert Jean René, PROT'INNOV**
**INTERNATIONAL SA Résidence de l'Observatoire**
**avenue Georges Clémenceau Boîte Postale 2764,**
**F-51066 Reims Cédex(FR)**

ACTORUM AG

## Description

La présente invention concerne un dispositif de détection et d'affichage pour machine à café express à service automatique permettant, de délivrer et d'afficher automatiquement le nombre de doses de café moulu ou le nombre de doses d'eau nécessaire à la phase d'infusion, selon la capacité de la coupe porte-filtre enclenchée sur le porte-coupe du moulin à café ou de la machine à café.

Il existe actuellement dans les bars, les self-services, les chaînes de restauration, etc..., des machines à café destinées à satisfaire les demandes de café expresso et de café à concentration variable. Il s'agit généralement de machines qui imposent à l'opérateur certaines contraintes au niveau des commandes ; ce qui se traduit par une perte de temps, une mauvaise condition d'utilisation et des risques d'erreurs ne garantissant pas la qualité d'infusion de café demandée. En effet, l'opérateur peut, par inadvertance, sélectionner, sur le clavier de commandes ergonomiques, une touche de sélection de doses d'eau ne correspondant pas, à la quantité de café tassé dans la coupe porte-filtre préalablement enclenchée sur le porte-coupe de la machine à café express; ce qui peut occasionner, dans certains cas, le débordement de l'infusion, avec tout ce que cela suppose comme gaspillage.

On connaît déja des dispositifs doseur d'eau pour machine à café express, utilisant un détecteur à effet Hall, comportant un corps, une cavité formée dans ce corps et fermée par un couvercle, un rotor monté dans cette cavité, au bord duquel est noyée au moins une piece magnétique, et un détecteur du type à effet Hall monté dans une position située en face de la trajectoire de la piece noyée. Ces dispositifs, utilisés comme débit metre ne permettent pas de remédier aux situations susdites, mais peuvent, par contre, être utilisés en complément de celui faisant l'objet de la présente invention.

Le dispositif, selon l'invention, vise à remédier à ces inconvénients et résout le probleme consistant à doter les machines à café express d'un dispositif permettant, à l'enclenchement de la coupe porte-filtre sur l'un quelconque des porte-coupes de ladite machine, l'affichage du nombre de tasses correspondant à la capacité de la coupe porte-filtre (1,2 ou 3 tasses) puis, dans le mode manuel, la distribution d'eau correspondant au nombre de petites tasses ou de grandes tasses sélectionnées ou, dans le mode automatique, la mise en route temporisée de la distribution d'eau correspondant au nombre de petites tasses ou de grandes tasses préselectionnées.

Ce problème est résolu par un dispositif de détection et d'affichage pour machine à café express à service automatique conforme à la revendication 1.

L'actionneur et le détecteur constituent un système générant des signaux électriques dont le nombre correspond à celui de la capacité en nombre de tasses de la coupe porte-filtre enclenchée sur le porte-coupe.

Selon un premier mode de réalisation de l'invention, le systeme actionneur-détecteur est constitué de barres tracées à la périphérie de la coupe porte-filtre et d'un lecteur de code à barres porté par le porte-coupe ou le bâti de la machine.

Selon un second mode de réalisation de l'invention, le système actionneur-détecteur est constitué d'une pastille de couleur portée par la coupe porte-filtre et d'un détecteur de couleur porté par le porte-coupe ou le bâti de la machine.

Selon un mode de réalisation préférentiel de l'invention, l'actionneur et le détecteur sont constitués respectivement d'un ou de plusieurs éléments magnétiques portés par la coupe porte-filtre et d'un détecteur à effet Hall porté par le porte-coupe.

Le ou les éléments magnétiques portés par la coupe porte-filtre sont insérés dans une ou plusieurs cavités aménagées à la périphérie de l'une des oreilles de fixation de la coupe porte-filtre. Le nombre de cavités et d'éléments magnétiques, portés par la coupe porte-filtre correspond au nombre de sorties du bec répartiteur de la coupe porte-filtre.

Le détecteur à effet Hall porté par les porte-coupes du moulin à café est disposé radialement selon un angle et dans une position permettant son balayage par le ou les éléments magnétiques portés par les coupes porte-filtre, lors de l'enclenchement de celles-ci.

L'affichage du nombre de tasses correspondant à la capacité de la coupe porte-filtre enclenchée au porte-coupe est obtenue par l'intermédiaire d'un affichage électronique.

Le nombre de doses d'eau correspondant à la capacité de la coupe porte-filtre enclenchée et à la concentration d'infusion recherchée est obtenue, par l'intermédiaire d'un circuit électronique, contrôlé par des touches de sélection de la concentration, reliant le détecteur au dispositif doseur d'eau. Ce circuit électronique est constitué essentiellement d'un amplificateur, d'un convertisseur de signal, d'un compteur, d'un décodeur, d'un afficheur et d'un comparateur.

Le clavier de commandes de la machine à café comporte l'afficheur électronique, les deux touches de sélection de la concentration, une touche de commande du fonctionnement en continu et une touche de fonctionnement manuel ou automatique. Toutes les touches étant surmontées d'un voyant lumineux de mise en fonction.

Les avantages obtenus grâce à cette invention consistent essentiellement en ceci que l'utilisateur est entièrement déchargé du choix du porte-coupe et de la sélection des doses d'eau correspondant à la capacité de la coupe porte-filtre. Son intervention se limitant alors à commander un café plus ou moins fort (petite tasse ou grande tasse) et à vérifier, sur un afficheur numérique, qu'il a bien choisi la coupe porte-filtre correspondant à son besoin (1,2 ou 3 tasses), avant de commander le déclenchement de la phase d'infusion.

D'autres caractéristiques et avantages apparaîtront dans la description qui va suivre du mode de réalisation préférentiel de l'invention, monté sur une machine à café express en vue de la délivrance des doses d'eau, donné à titre d'exemple non limitatif, au regard des dessins annexés sur lesquels:

- La figure 1, représente, une vue de côté, d'un ensemble coupe porte-filtre "une tasse" selon l'invention,

- La figure 2, représente, une vue de côté, d'un ensemble coupe porte-filtre "deux tasses" selon l'invention,

- La figure 3, représente une vue de côté d'un ensemble coupe porte-filtre "trois tasses" selon l'invention,

- La figure 4, représente une vue de dessus de l'ensemble coupe porte-filtre en position d'entrée dans le porte-coupe équipé du dispositif selon l'invention,

- La figure 5, représente une vue de dessus de l'ensemble coupe porte-filtre enclenché dans le porte-coupe, équipé du dispositif selon l'invention,

- La figure 6, représente une vue de face du clavier de commandes ergonomiques d'une machine à café express équipée du dispositif selon l'invention,

- La figure 7, représente le schéma bloc du systeme électronique de commande du dispositif doseur d'eau.

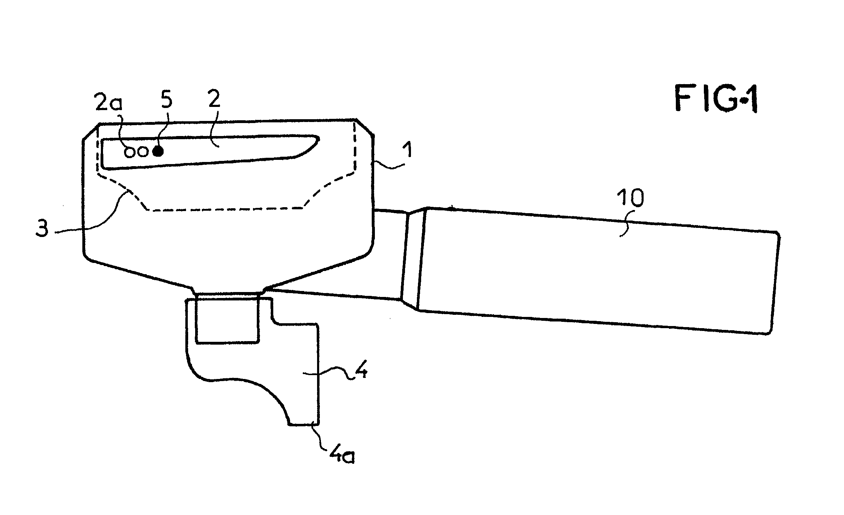

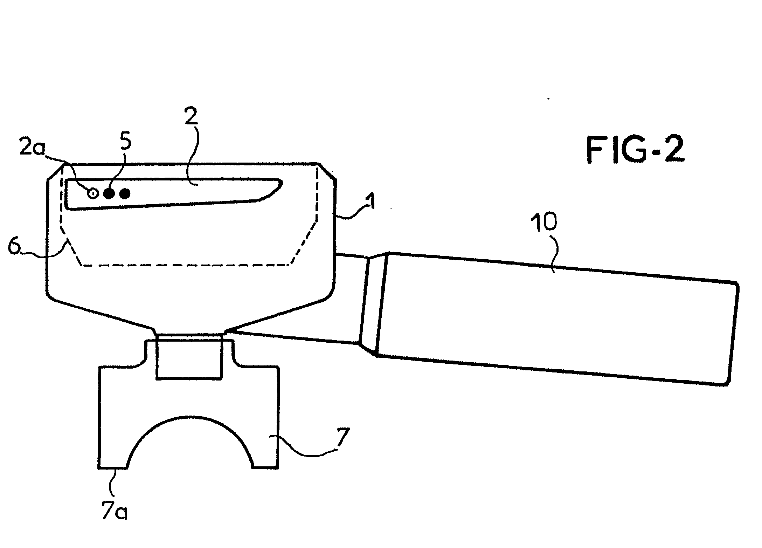

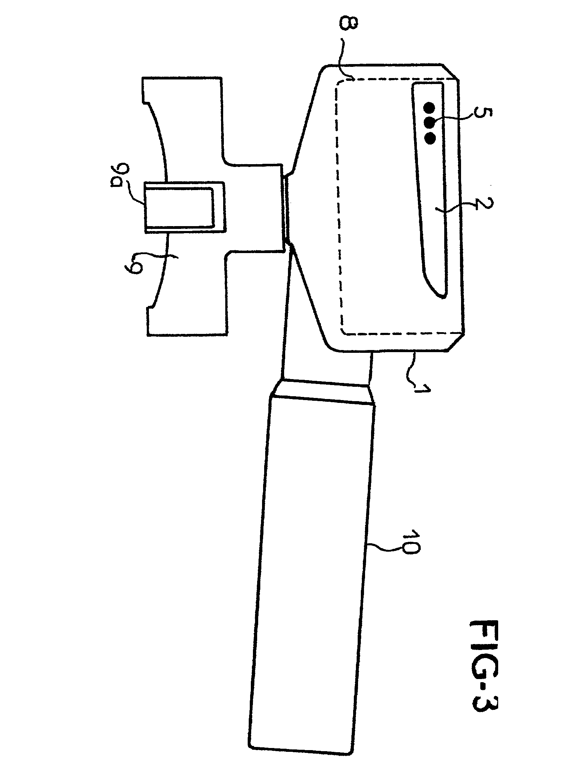

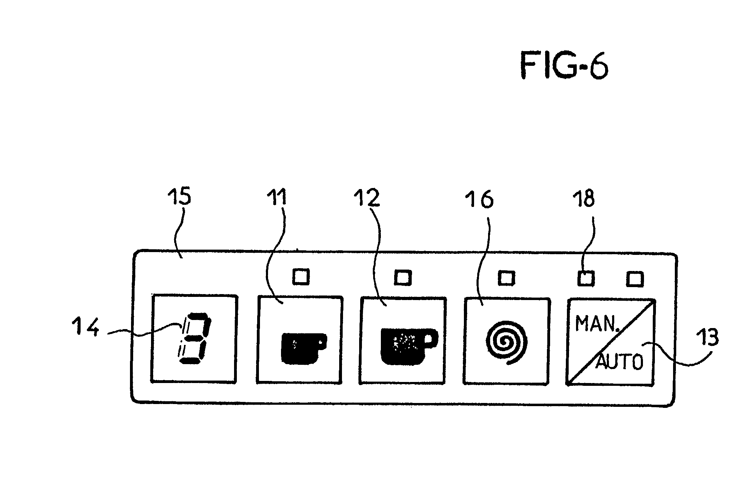

Les figures 1 à 6 représentent un dispositif de détection et d'affichage pour machine à café express à service automatique, permettant la délivrance et l'affichage automatique du nombre de doses de café moulu ou d'eau nécessaire à la phase d'infusion selon la capacité de la coupe porte-filtre enclenché sur le porte coupe 11. Ce dispositif est constitué principalement d'au moins une piece magnétique 5 encastrée dans au moins un orifice 2a percé dans le bord de l'une des oreilles latérales 2 de la coupe porte-filtre 1, et d'un détecteur A à effet Hall monté sur le pourtour du porte-coupe 11, dans une position angulaire permettant son balayage par les orifices 2a, lors de la rotation de la coupe porte-filtre 1 dans le porte-coupe 11, par l'intermédiaire du manche 10, permettant, une fois la coupe porte-filtre enclenchée, la prise en compte du nombre de tasses demandé par le système électronique de commande du dispositif de dosage d'eau qui délivrera les doses correspondantes des que l'utilisateur aura appuyé sur les touches "petite tasse 11" ou "grande tasse 12" et de commande 13 du tableau de commande 15 comportant un afficheur numérique 14 indiquant le nombre de tasses correspondant à la coupe porte-filtre utilisée.

En examinant les figures 1 à 3, on remarque que les oreilles 2 de la coupe porte-filtre 1 sont munies de trois cavités cylindriques 2a, régulièrement espacées, situées dans un plan transversal, dans lesquelles sont encastrées un, deux ou trois éléments magnétiques constitués d'aimants 5 selon que le bec répartiteur 4, 7 ou 9 comporte un, deux ou trois orifices de sorties 4a, 7a ou 9a permettant le déversement simultané de l'infusion dans une, deux ou trois tasses; chacune des coupes porte-filtre 1 étant équipée d'un filtre 3, 6 ou 8 dont la capacité correspond au nombre de tasses.

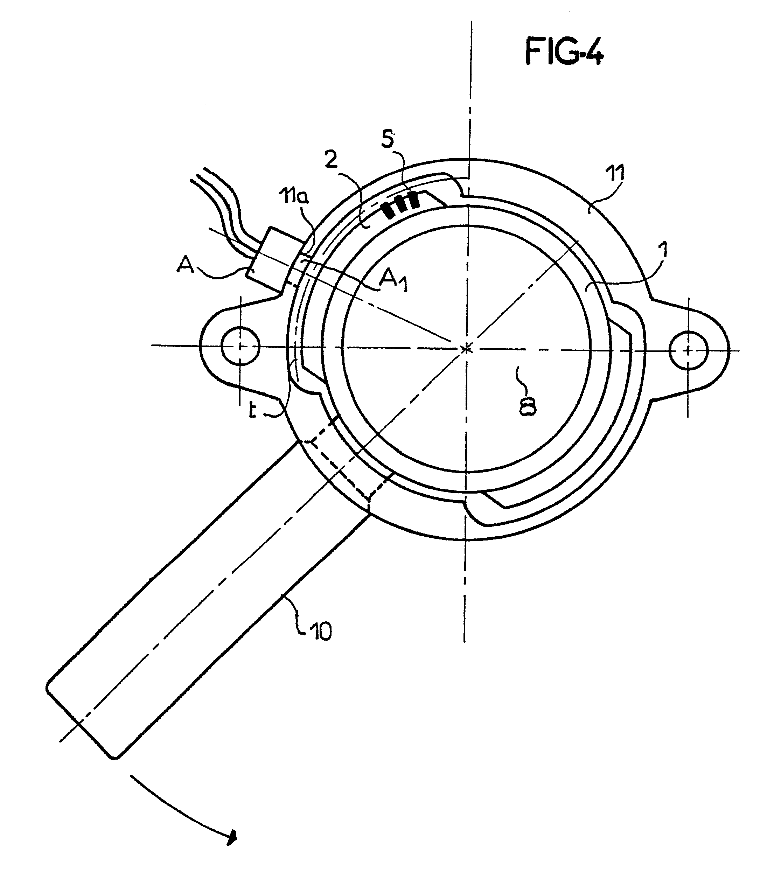

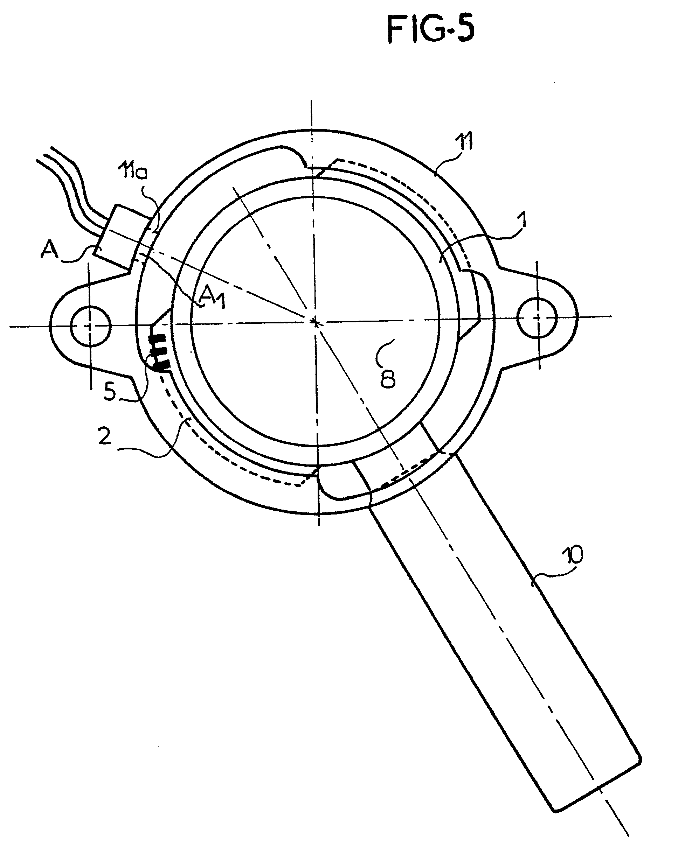

En examinant les figures 4 et 5, on remarque que le porte-coupe 11 est équipé d'un détecteur à effet Hall A dont l'élément sensible A! est logé dans un orifice 11a percé dans la paroi dudit porte-coupe 11 dans un plan correspondant à celui dans lequel sont situées les cavités 2a, aménagées sur le pourtour de l'une des oreilles 2 de la coupe porte-filtre 1 lorsque ladite coupe porte-filtre est enclenchée dans le porte-coupe 11, et situé radialement selon un angle permettant son balayage par le ou les aimants 5 lorsque l'on fait passer la coupe porte-filtre 1 de la position d'introduction correspondant à la figure 4 à la position de fin d'enclenchement correspondant à la figure 5. L'élément sensible A! du détecteur à effet Hall A est donc ainsi situé sur la trajectoire t du ou des aimants 5. Ce détecteur à effet Hall A, sensible aux variations de flux magnétique, génère un signal proportionnel à cette variation, qui est mis à profit pour effectuer le comptage des aimants 5, dont le nombre, comme cela à été précisé ci-dessus, correspond à la capacité en nombre de tasses, de la coupe porte-filtre 1 enclenchée sur le porte-coupe.

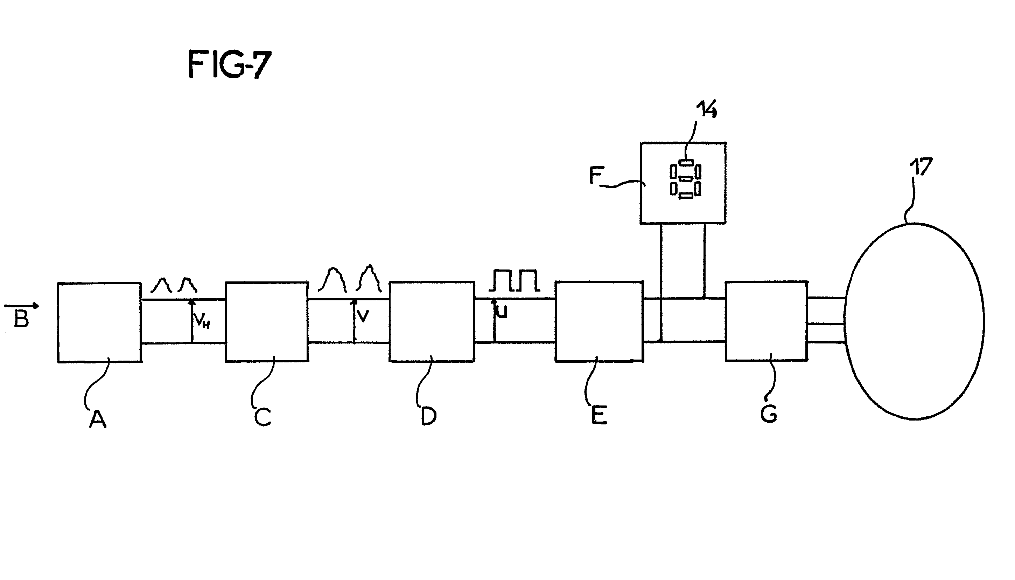

En examinant la figure 7, on remarque que, pour obtenir la distribution et l'affichage automatique du nombre de doses d'eau et du nombre de tasses correspondant à la fois à la capacité de la coupe porte-filtre et à la concentration de l'infusion recherchée, le détecteur à effet Hall A est incorporé à un circuit électronique le reliant au distributeur de doses d'eau 17.

Ce circuit électronique assure, par l'intermédiaire d'un amplificateur C, l'amplification des impulsions de tension en V génerées par le détecteur à effet Hall A, avant que celles-ci soient transformées en signaux d'impulsions carrés par l'intermédiaire d'un convertisseur D, afin que lesdits signaux puissent être traités par un compteur E qui permet de présenter sous une forme visible, par l'intermédiaire d'un décodeur F et d'un afficheur électronique 14 , le nombre de tasses correspondant à la coupe porte-filtre enclenchée et de commander, par l'intermédiaire du comparateur G, la délivrance par le distributeur 17, du nombre de doses correspondant à la capacité de la coupe porte-filtre enclenchée et à la concentration désirée, puisque le nombre de doses peut être modulé par action sur les touches "petite tasse 11" ou "grande tasse 12" situées sur le tableau de commande 15 sur lequel est monté l'afficheur électronique 14.

Le dispositif ainsi décrit à titre d'exemple correspond à celui permettant la délivrance automatique de doses d'eau, mais on conçoit aisément qu'il puisse être utilisé aussi, sous réserve d'une adaptation très simple, pour commander la distribution automatique de doses de café, en fonction de la capacité de la coupe porte-filtre utilisée par un moulin à café, combiné ou non à la machine à café.

Les applications de l'invention ne se limitent pas, bien entendu, aux modes de réalisation évoqués et développés ci-dessus, car le détecteur et les actionneurs utilisés pour obtenir les mêmes avantages peuvent être constitués de dispositifs infra-rouge, ou autres moyens du genre susceptibles de générer des signaux électriques dont le nombre correspond à celui de la capacité en nombre de tasses de la coupe porte-filtre enclenchée sur le porte-coupe.

## Revendications

1. Dispositif de détection et d'affichage pour machine à café express à service automatique permettant la délivrance et l'affichage automatique du nombre de doses de café moulu ou de doses d'eau correspondant à la quantité d'infusion recherchée, selon la capacité de la coupe porte-filtre enclenchée sur le porte-coupe du moulin à café ou de la machine à café, la détection et l'affichage automatique du nombre de doses de café moulu ou d'eau en fonction de la capacité de la coupe porte-filtre étant obtenu par l'intermédiaire d'un actionneur porté par la coupe porte-filtre et d'un détecteur porté par le porte-coupe du moulin à café ou de la machine à café, dispositif dans lequel l'actionneur et le détecteur constituent un système générant des signaux électriques dont le nombre correspond à celui de la capacité en nombre de tasses de la coupe porte-filtre enclenchée sur le porte-coupe, l'affichage du nombre de tasses correspondant à la capacité de la coupe porte-filtre enclenchée au porte-coupe est obtenu par l'intermédiaire d'un afficheur électronique (14), le nombre de doses d'eau correspondant à la capacité de la coupe porte-filtre enclenchée et à la concentration d'infusion recherchée est obtenu par l'intermédiaire d'un circuit électronique contrôlé par des touches de sélection de la concentration (11 et 12) reliant le détecteur porté par le porte-coupeau dispositif doseur d'eau (17).

2. Dispositif selon la revendication 1, caractérisé en ce que le système actionneur-détecteur générant des signaux électriques dont le nombre correspond à celui de la capacité en nombre de tasses de la coupe porte-filtre enclenchée sur le porte-coupe est constitué de barres tracées à la périphérie de la coupe porte-filtre et d'un lecteur de code à barres porté par le porte-coupe ou le bâti de la machine à café.

3. Dispositif selon la revendication 1, caractérisé en ce que le système actionneur-détecteur généré-rant des signaux électriques dont le nombre correspond à celui de la capacité en nombre de tasses de la coupe porte-filtre enclenchée sur le porte-coupe est constitué d'une pastille de couleur portée par la coupe porte-filtre et d'un détecteur de couleur porté par le porte-coupe ou le bâti de la machine à café.

4. Dispositif selon la revendication 1, caractérisé en ce que le système actionneur-détecteur générant des signaux électriques dont le nombre correspond à celui de la capacité en nombre de tasses de la coupe porte-filtre enclenché sur le porte-coupe est constitué d'éléments magnétiques (5) portés par la coupe porte-filtre (1) et d'un détecteur à effet Hall (A) porté par le porte-coupe.

5. Dispositif selon la revendication 4, caractérisé en ce que le ou les éléments magnétiques (5) portés par la coupe porte-filtre (1) sont insérés dans une ou plusieurs cavités (2a) aménagées à la périphérie de l'une des oreilles de fixation (2) de la coupe porte-filtre (1).

6. Dispositif selon la revendication 5, caractérisé en ce que le nombre de cavités (2a) et d'éléments magnétiques (5) portés par la coupe porte-filtre (1) correspond au nombre de sorties du bec répartiteur (4,7 ou 9) de la coupe porte-filtre (1).

7. Dispositif selon la revendication 4, caractérisé en ce que le détecteur à effet Hall (A) porté par les porte-coupes (11) du moulin à café ou de la machine à café est disposé radialement selon un angle et dans une position permettant son balayage par le ou les éléments magnétiques (5) portés par les coupes porte-filtre (1) lors de l'enclenchement de ces dernières.

8. Dispositif selon la revendication 1, caractérisé en ce que le circuit électronique reliant le détecteur (A) au dispositif doseur d'eau (17) est constitué d'un amplificateur (C), d'un convertisseur de signal (D), d'un compteur (E), d'un décodeur (F), d'un afficheur (14) et d'un comparateur (G).

9. Dispositif selon la revendication 1, caractérisé en ce que le clavier de commandes (15) de la machine à café comporte l'afficheur électronique (14), les deux touches de sélection de la concentration (11 et 12) une touche de commande du fonctionnement en continu (16) et une touche de fonctionnement manuel ou automatique (13), toutes les touches étant surmontées de voyants lumineux (18) de mise en fonction.

## Patentansprüche

1. Abtast- und Anzeigevorrichtung für automatische Espresso-Kaffeemaschine, die die automatische Abgabe und Anzeige einer Anzahl von Portionen gemahlenen Kaffees oder von einer gewünschten Aufgußmenge entsprechenden Wasserportionen gemäß dem Fassungsvermögen der im Schalenträger einer Kaffeemühle oder einer Kaffeemaschine eingerasteten Filterträgerschale ermöglicht, wobei die automatische Erfassung und Anzeige der vom Fassungsvermögen der Filterträgerschale abhängigen Anzahl von Portionen gemahlenen Kaffees oder Wassers mittels Zwischenschaltens eines von der Filterträgerschale getragenen Betätigungselementes und eines vom Schalenhalter der Kaffeemühle oder der Kaffeemaschine getragenen Abtasters gewonnen wird, wobei in der Vorrichtung das Betätigungselement und der Abtaster eine Anordnung bilden, die elektrische Signale erzeugt, deren Anzahl derjenigen des Tassenzahlfassungsvermögens der im Schalenhalter eingerasteten Filterträgerschale entspricht, wobei die Anzeige der dem Fassungsvermögen der im Schalenhalter eingerasteten Filterträgerschale entsprechende Tassenzahl mittels Zwischenschaltens einer elektronischen Anzeigevorrichtung (14) erhalten wird und wobei die dem Fassungsvermögen der eingerasteten Filterträgerschale und der Konzentration des gewünschten Aufgusses entsprechende Anzahl von Wasserportionen mittels Zwischenschaltens einer elektronischen Schaltung erhalten wird, die mittels Tasten zur Konzentrationswahl (11 und 12) gesteuert wird und den vom Schalenhalter getragenen Abtaster mit der Wasserdosiereinrichtung (17) verbindet.

2. Vorrichtung gemäß Anspruch 1, dadurch gekennzeichnet, daß die Betätigungselement/Abtaster-Anordnung, die elektrische Signale erzeugt, deren Anzahl derjenigen des Tassenzahlfassungsvermögens der im Schalenhalter eingerasteten Filterträgerschale entspricht, von an der Umfangslinie der Filterträgerschale aufgezeichneten Strichen und von einem vom Schalenhalter oder vom Rahmen der Kaffeemaschine getragenen Strichcodeleser gebildet wird.

3. Vorrichtung gemäß Anspruch 1, dadurch gekennzeichnet, daß die Betätigungselement/Abtaster-Anordnung, die elektrische Signale erzeugt, deren Anzahl derjenigen des Tassenzahlfassungsvermögens der im Schalenhalter eingerasteten Filterträgerschale entspricht, von einem von der Filterträgerschale getragenen Farb-Chip und einem vom Schalenhalter oder vom Rahmen der Kaffeemaschine getragenen Farbabtaster gebildet wird.

4. Vorrichtung gemäß Anspruch 1, dadurch gekennzeichnet, daß die Betätigungselement/Abtaster-Anordnung, die elektrische Signale erzeugt, deren Anzahl derjenigen des Tassenzahlfassungsvermögens der im Schalenhalter eingerasteten Filterträgerschale entspricht, von von der Filterträgerschale (1) getragenen magnetischen Elementen (5) und von einem vom Schalenträger getragenen Hall-Effekt-Abtaster (A) gebildet wird.

5. Vorrichtung gemäß Anspruch 4, dadurch gekennzeichnet, daß das oder die von der Filterträgerschale (1) getragenen magnetischen Elemente (5) in einen oder mehrere Hohlräume (2a) eingebracht wird, die an der Umfangslinie eines der angegossenen Befestigungssitze (2) der Filterträgerschale (1) angeordnet sind.

6. Vorrichtung gemäß Anspruch 5, dadurch gekennzeichnet, daß die Anzahl der an der Filterträgerschale (1) angeordneten Hohlräume (2a) und magnetischen Elemente (5) der Anzahl der Ausgänge des Ausgußverteilers (4, 7 oder 9) der Filterträgerschale (1) entspricht.

7. Vorrichtung gemäß Anspruch 4, dadurch gekennzeichnet, daß der von den Schalenhaltern (11) der Kaffeemühle oder der Kaffeemaschine getragene Hall-Effekt-Abtaster (A) in radialer Richtung in einem Winkel und an einer Stelle angeordnet ist, daß dessen Abtastung durch das oder die von den Filterträgerschalen (1) getragenen magnetischen Elementen (5) ermöglicht wird, wenn die Filterträgerschalen (1) eingerastet werden.

8. Vorrichtung gemäß Anspruch 1, dadurch gekennzeichnet, daß die den Abtaster (A) mit der Wasserdosierungsvorrichtung (17) verbindende elektronische Schaltung von einer Verstärkereinrichtung (C), einer Signalwandlereinrichtung (D), einer Zähleinrichtung (E), einer Dekodereinrichtung (F), einer Anzeigeeinrichtung (14) und einer Komparatoreinrichtung (G) gebildet wird.

9. Vorrichtung gemäß Anspruch 1, dadurch gekennzeichnet, daß die Funktionstastatur (15) der Kaffeemaschine eine elektronische Anzeigeeinrichtung (14), die zwei Konzentrationswahltasten (11 und 12), eine Dauerbetriebsfunktionstaste (16) und eine Taste für Handbetrieb oder automatischen Betrieb (13) aufweist, wobei über sämtlichen Tasten Leuchtanzeigen (18) angebracht sind, die den Ein/Aus-Zustand der jeweiligen Taste angeben.

## Claims

1. Detection and display device for automatic service expresso coffee machine which automatically outputs and displays the number of ground or water doses required for the desired infusion quantity, depending on the capacity of the filter-holder bowl engaged on the bowl-holder of the coffee grinder or coffee machine; automatic detection and display of the number of ground coffee or water doses according to the capacity of the filter-holder bowl are obtained by means of an actuator mounted on the filter-holder bowl and a detector mounted on the bowl-holder of the coffee grinder or coffee machine, device in which the actuator and detector form a system generating electric signals the number of which corresponds to the capacity in cups of the filter-holder bowl engaged on the bowl-holder, display of the number of cups corresponding to the capacity of the filter-holder bowl engaged on the bowl-holder is obtained by means of an electronic readout (14) and the number of water doses corresponding to the capacity of the filter-holder bowl engaged and the desired coffee strength is obtained by means of an electronic circuit controlled by strength selection keys (11 and 12) connecting the detector mounted on the bowl-holder to the water metering device (17).

2. Device as per claim 1, characterized in that the actuator-detector system electric signals the number of which corresponds to the capacity in cups of the filter-holder bowl engaged on the bowl-holder consists of bars traced on the edge of the filter-holder bowl and a bar code reader mounted on the bowl-holder or the coffee machine body.

3. Device as per claim 1, characterized in that the actuator-detector system generating electric signals the number of which corresponds to the capacity in cups of the filter-holder bowl engaged on the bowl-holder consists of a color pad mounted on the filter-holder bowl and a color detector mounted on the bowl-holder or the coffee machine body.

4. Device as per claim 1, characterized in that the actuator-detector system generating electric signals the number of which corresponds to the capacity in cups of the filter-holder bowl engaged on the bowl-holder consists of magnetic elements (5) mounted on the filter-holder bowl (1) and a Hall effect (A) mounted on the bowl-holder.

5. Device as per claim 4, characterized in that magnetic element(s) (5) mounted on filter-holder bowl (1) are inserted in one or more cavities (2a) provided on the edge of one of mounting ears (2) of filter-holder bowl (1).

6. Device as per claim 5, characterized in that the number of cavities (2a) and magnetic elements (5) mounted on filter-holder bowl (1) corresponds to the number of outlets of distribution nozzle (4, 7 or 9) of filter-holder bowl (1).

7. Device as per claim 4, characterized in that Hall effect detector (A) on bowl-holders (11) of the coffee grinder or coffee machine is located radially at such an angle and in such a position that it is scanned by magnetic element(s) (5) mounted on filter-holder bowls (1) when the filter-holder bowls are engaged.

8. Device as per claim 1, characterized in that the electronic circuit connecting detector (A) to water metering system (17) consists of amplifier (C), signal converter (D), counter (E), decoder (F), readout (14) and comparator (G).

9. Device as per claim 1, characterized in that control keypad (15) of the coffee machine includes electronic readout (14), the two strength selection keys (11 and 12), a continuous operation control key (16) and a manual or automatic operation key (13), all of which are surmounted by operation indicator lights (18).

FIG·1

EP 0 280 594 B1

FIG·2

EP 0 280 594 B1

FIG-3

FIG-4

# FIG·5

# FIG·6

## FIG-7

EP 0 280 594 B1